(19) Europäisches Patentamt
European Patent Office
Office européen des brevets

(11) **EP 4 697 483 A1**

(12) **EUROPEAN PATENT APPLICATION**
published in accordance with Art. 153(4) EPC

(43) Date of publication:
**18.02.2026 Bulletin 2026/08**

(21) Application number: **24787988.5**

(22) Date of filing: **07.04.2024**

(51) International Patent Classification (IPC):
*H01M 50/531* (2021.01)

(52) Cooperative Patent Classification (CPC):
Y02E 60/10

(86) International application number:
**PCT/CN2024/086338**

(87) International publication number:
**WO 2024/212885 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.04.2023 CN 202320904551 U**

(71) Applicant: **BYD Company Limited**
**Shenzhen, Guangdong 518118 (CN)**

(72) Inventors:
• **YU, Tao**
  **Shenzhen, Guangdong 518118 (CN)**

• **RONG, Liangbin**
  **Shenzhen, Guangdong 518118 (CN)**
• **ZHANG, Lulu**
  **Shenzhen, Guangdong 518118 (CN)**
• **LU, Bing**
  **Shenzhen, Guangdong 518118 (CN)**
• **HU, Haotian**
  **Shenzhen, Guangdong 518118 (CN)**

(74) Representative: **Mathys & Squire**
**The Shard**
**32 London Bridge Street**
**London SE1 9SG (GB)**

(54) **CURRENT COLLECTOR, BATTERY CELL, BATTERY PACK AND ELECTRICAL APPARATUS**

(57) A current collector (100), a battery cell (1000), a battery pack (2000) and a power consuming apparatus (3000) are provided. A first connection region of the current collector includes a middle portion (122) and a plurality of first connection portions (121) connected to the middle portion and a jelly roll (200). A second connection portion is located on one side of the first connection region, is connected to the middle portion through a connecting piece (140), and is electrically connected to a housing. The first connection portion and an inner peripheral wall of the second connection portion are spaced apart. A radial dimension of an orthographic projection of a spacing gap on a first plane ranges from 0.5 mm to 2 mm.

FIG. 1

## Description

## CROSS-REFERENCE TO RELATED APPLICATIONS

This application claims priority to Chinese Patent Application No. 2023209045515, filed on April 14, 2023 and entitled "CURRENT COLLECTOR, BATTERY CELL, BATTERY PACK, AND POWER CONSUMING APPARATUS", which is incorporated herein by reference in its entirety.

## TECHNICAL FIELD

This application relates to the field of power apparatus technologies, and in particular, to a current collector, a battery cell, a battery pack, and a power consuming apparatus.

## BACKGROUND

In the related art, to implement electrical connection between a jelly roll and a housing, a current collector is usually disposed between the jelly roll and the housing.

However, when an existing current collector connects the jelly roll and the housing, the current collector needs to be bent. As a result, connection efficiency of the current collector is low, and the current collector is prone to fracture during use. In addition, the existing current collector cannot ensure a connection area between the current collector and the jelly roll and a connection area between the current collector and the housing. As a result, working performance of a battery cell is reduced.

## SUMMARY

Therefore, this application provides a current collector. The current collector can be used to implement connection between a jelly roll and a housing without bending, and connection areas can be ensured, to solve the technical problem in the related art that the current collector needs to be bent during the connection and the connection areas are small.

According to the current collector in embodiments of this application, an orthographic projection of an outer peripheral wall of the current collector on a first plane is located on a first circle, and the first plane is perpendicular to a thickness direction of the current collector. The current collector includes: a first connection region, wherein the first connection region includes a middle portion and a plurality of first connection portions, the plurality of first connection portions being sequentially arranged in a circumferential direction of the middle portion, the plurality of first connection portions being separately connected to the middle portion, and each first connection portion being adapted to be electrically connected to the jelly roll; a second connection portion, wherein the second connection portion extends in the circumferential direction of the middle portion and is located on one side of the first connection region; and a connecting piece, wherein the connecting piece is connected between the second connection portion and the middle portion, the first connection portion and an inner peripheral wall of the second connection portion being spaced apart to form a spacing gap, a value of a radial dimension $G_1$ of an orthographic projection of the spacing gap on the first plane ranging from 0.5 mm to 2 mm, and the second connection portion being electrically connected to the housing.

According to the current collector in embodiments of this application, the first connection portion and the inner peripheral wall of the second connection portion are spaced apart to form the spacing gap, and the value of the radial dimension $G_1$ of the orthographic projection of the spacing gap on the first plane is set to range from 0.5 mm to 2 mm, to ensure that the first connection portion and the second connection portion can be effectively separated, and facilitate adjustment of a relative position between the first connection portion and the second connection portion, that is, to allow the first connection region and the second connection portion to be movable relative to each other. In this way, it is ensured that electrical connection between the jelly roll and the housing can be implemented on the basis that the current collector does not need to be bent, to reduce connection difficulty, improve connection efficiency, and further help increase a capacity of the jelly roll. In addition, the foregoing setting can further ensure that both the first connection portion and the second connection portion have sufficient connection areas, so that the electrical connection between the jelly roll and the housing can be effectively implemented by using the current collector, to ensure connection quality, and further improve working performance of a battery cell.

Optionally, the first connection portion and the connecting piece are spaced apart in a circumferential direction of the current collector.

Optionally, the connecting piece extends obliquely toward the second connection portion relative to the middle portion, so that the first connection region and the second connection portion have a height difference.

Optionally, a value of a radius $R_1$ of the current collector ranges from 10 mm to 100 mm.

Optionally, orthographic projections of outer peripheral walls of the plurality of first connection portions on the first plane are all located on a second circle, and a radius $R_2$ of the second circle and the radius $R_1$ of the current collector meet the following condition: $\frac{1}{2}R_1 \leq R_2 < R_1$.

Optionally, the second connection portion forms an annular structure, and the inner peripheral wall of the second connection portion is connected to the middle portion through the connecting piece.

Optionally, a radial width of the second connection portion is $W_1$, $1 \text{ mm} \leq W_1 \leq \frac{1}{2}R_1$, and $R_1$ indicates the

radius of the current collector.

Optionally, there are a plurality of connecting pieces, and the plurality of connecting pieces are evenly spaced apart; and the plurality of first connection portions and the plurality of connecting pieces are alternately distributed in the circumferential direction of the current collector.

Optionally, the first connection portion has a first surface connected to the jelly roll, the second connection portion has a second surface connected to the housing, and the first surface and the second surface are parallel to each other.

Optionally, the second connection portion is provided with a stop protrusion extending toward the first connection portion, the stop protrusion is located on a radially outer side of the first connection portion, and the stop protrusion is adapted to be located on a radially outer side of a tab of the jelly roll.

Optionally, the stop protrusion is defined through bending and deformation of a part of the second connection portion.

Optionally, a first limiting portion is provided on the second connection portion, and the first limiting portion is adapted to be in limiting fit with a second limiting portion on the housing.

Optionally, the first limiting portion is a limiting port that extends through the second connection portion in a thickness direction of the second connection portion.

Optionally, the second connection portion forms an annular structure, an orthographic projection of the limiting port on the first plane forms a rectangle, a circumferential length of the limiting port is $G_2$, 0.5 mm$\leq G_2 \leq \pi R_1/n_1$, $R_1$ indicates the radius of the current collector, and $n_1$ indicates a quantity of limiting ports; and/or a radial width $W_3$ of the limiting port meets the following condition: 0.5 mm$\leq W_3 < W_1$, wherein the radial width of the second connection portion is $W_1$.

Optionally, the middle portion is provided with a liquid injection port that extends through the middle portion in a thickness direction of the middle portion.

A battery cell according to embodiments of this application includes: a housing, wherein an accommodation cavity is formed in the housing; a jelly roll, wherein the jelly roll is disposed in the accommodation cavity; and a current collector, wherein the current collector is the foregoing current collector, the current collector being disposed between the jelly roll and the housing, the first connection portion being electrically connected to the jelly roll, and the second connection portion being connected to the housing.

The battery cell according to embodiments of this application uses the foregoing current collector, so that electrical connection between the jelly roll and the housing can be effectively implemented, connection quality can be ensured, and connection difficulty can be reduced, to ensure working performance of the battery cell, and further increase a capacity of the battery cell.

A battery pack according to embodiments of this application includes a plurality of the foregoing battery cells.

The battery pack according to embodiments of this application uses the foregoing battery cells, so that manufacturing difficulty of the battery pack can be reduced, manufacturing efficiency can be improved, and working performance of the battery pack can be ensured.

A power consuming apparatus according to embodiments of this application includes the foregoing battery pack.

The power consuming apparatus according to embodiments of this application uses the foregoing battery pack, to ensure working performance of the power consuming apparatus, prolong a service life of the power consuming apparatus, and reduce use costs.

Additional aspects and advantages of this application will become clear in the following description or will be learned from the practice of this application.

**BRIEF DESCRIPTION OF DRAWINGS**

The above and/or additional aspects and advantages of this application will become clear and readily understood from the description of embodiments with reference to the following accompanying drawings.

FIG. 1 is a schematic diagram of a structure of a current collector according to some embodiments of this application;

FIG. 2 is a top view of a current collector according to some embodiments of this application;

FIG. 3 is a side view of a current collector according to some embodiments of this application;

FIG. 4 is a locally enlarged view of a region I in FIG. 3;

FIG. 5 is a schematic diagram of a second connection portion before and after movement according to some embodiments of this application;

FIG. 6 is a top view of a current collector according to other embodiments of this application;

FIG. 7 is a schematic diagram of cooperation between a current collector and a cover plate according to other embodiments of this application;

FIG. 8 is a sectional view of a battery cell according to some embodiments of this application; and

FIG. 9 is a schematic diagram of a power consuming apparatus according to some embodiments of this application.

Reference numerals:

1000: battery cell; 100: current collector; 120: first connection region; 121: first connection portion; 122: middle portion; 1221: liquid injection port; 1222: penetration port; 1223: positioning port; 131: second connection portion; 1311: reinforcement portion; 1312: avoidance port; 1313: stop protrusion; 132: first limiting portion; 140: connecting piece; 150: spacing gap; 200: jelly roll; 300: cover plate; 310: second limiting portion; 400: casing; 500: housing; 2000: battery pack; 3000: power consuming apparatus.

## DESCRIPTION OF EMBODIMENTS

Embodiments of this application are described in detail below, and examples of the embodiments are shown in the accompanying drawings. In the accompanying drawings, same or similar reference numerals constantly indicate same or similar elements or elements having same or similar functions. The following embodiments described with reference to the accompanying drawings are examples, and are merely intended to explain this application, but should not be construed as a limitation on this application.

In the description of this application, it will be understood that an orientation or positional relationship indicated by the term "center", "longitudinal", "transverse", "length", "width", "thickness", "upper", "lower", "front", " back", "left", "right", "vertical", "horizontal", "top", "bottom", "internal", "external", "clockwise", "counterclockwise", "axial direction", "radial direction", "circumferential direction", or the like is based on an orientation or positional relationship shown in the accompanying drawings, and is merely for ease of describing this application and simplifying the description, but does not indicate or imply that an apparatus or an element referred to must have a specific orientation or be constructed and operated in a specific orientation, and therefore cannot be understood as a limitation on this application.

The following describes a current collector 100 in embodiments of this application with reference to the accompanying drawings of this specification.

An orthographic projection of an outer peripheral wall of the current collector 100 on a first plane is located on a first circle, and the first plane is perpendicular to a thickness direction of the current collector 100. The thickness direction of the current collector 100 herein will also be understood as a height direction of a battery cell 1000. Therefore, the first plane will also be understood as a plane perpendicular to the height direction of the battery cell 1000. In other words, an orthographic projection of the outer peripheral wall of the current collector 100 on the plane perpendicular to the height direction of the battery cell 1000 is located on the first circle. In this way, the current collector 100 forms a shape similar to a circle, that is, the current collector 100 is formed similar to a circular current collector plate 100. The circular current collector 100 allows the shape of the current collector 100 to be adapted to shapes of a jelly roll 200 and a housing 500, so as to reduce difficulty in connecting the current collector 100 to the jelly roll 200 and the housing 500, increase connection areas, and ensure connection quality.

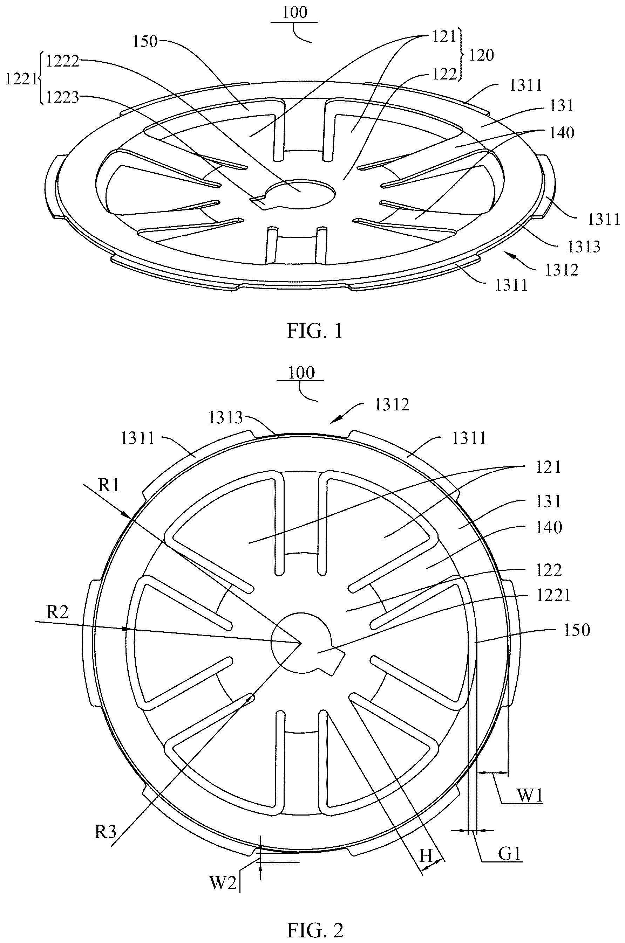

As shown in FIG. 1 and FIG. 2, the current collector 100 according to embodiments of this application includes a first connection region 120, a second connection portion 131, and connecting pieces 140.

As shown in FIG. 1 and FIG. 2, the first connection region 120 includes a middle portion 122 and a plurality of first connection portions 121. The plurality of first connection portions 121 are sequentially arranged in a circumferential direction of the middle portion 122. The plurality of first connection portions 121 are separately connected to the middle portion 122. Each first connection portion 121 is adapted to be electrically connected to the jelly roll 200. Each first connection portion 121 is electrically connected to the jelly roll 200, to ensure a connection area between the first connection region 120 and the jelly roll 200, that is, to ensure a connection area between the current collector 100 and the jelly roll 200, so that an overcurrent capability of the current collector 100 is improved.

In descriptions of this application, unless otherwise stated, "a plurality of" means two or more than two.

The plurality of first connection portions 121 are separately connected to the middle portion 122, to support the plurality of first connection portions 121 by using the middle portion 122, so that position stability of the first connection portion 121 is improved, and connection strength between the first connection region 120 and the jelly roll 200 is ensured.

In some examples, the middle portion 122 is also electrically connected to the jelly roll 200, to further ensure the connection area between the first connection region 120 and the jelly roll 200. Certainly, the middle portion 122 may alternatively not be electrically connected to the jelly roll 200, and the middle portion 122 only serves a supporting function, to ensure supporting effect.

In addition, the plurality of first connection portions 121 are set to be sequentially arranged in the circumferential direction of the middle portion 122. In this way, it is ensured that the plurality of first connection portions 121 can all be connected to the middle portion 122. In this case, the middle portion 122 and the plurality of first connection portions 121 support each other, to ensure structural stability of the first connection region 120, facilitate a connection to the jelly roll 200 by using the first connection portion 121, and reduce connection difficulty. In addition, circumferential space of the middle portion 122 can be properly utilized, to increase an area of the first connection portion 121, further increase the connection area between the first connection portion 121 and the jelly roll 200, and improve the overcurrent capability of the current collector 100.

As shown in FIG. 1 and FIG. 2, the second connection portion 131 extends in the circumferential direction of the middle portion 122, and the second connection portion 131 is located on one side of the first connection region 120. The connecting piece 140 is connected between the second connection portion 131 and the middle portion 122. The first connection portion 121 and an inner peripheral wall of the second connection portion 131 are spaced apart to form a spacing gap 150. A value of a radial dimension $G_1$ of an orthographic projection of the spacing gap 150 on the first plane ranges from 0.5 mm to 2 mm. The second connection portion 131 is electrically connected to the housing 500. Herein, the first connection portion 121 and the inner peripheral wall of the second connection portion 131 are spaced apart, and the spacing gap 150 is formed between the first connection portion 121 and the inner peripheral wall of the second connection portion 131. The radial dimension of the orthographic projection of the spacing gap 150 on the plane perpendicular to the height direction of the battery cell 1000 is $G_1$, and the value of $G_1$ ranges from 0.5 mm to 2 mm.

It should be noted that the inner peripheral wall of the second connection portion 131 will be understood as a peripheral wall of a side that is of the second connection portion 131 and that is close to the first connection portion 121.

A plurality of second connection portions 131 are set to extend in the circumferential direction of the middle portion 122, to further reasonably utilize the circumferential space of the middle portion 122, so as to increase an area of the second connection portion 131, further increase a connection area between the second connection portion 131 and the housing 500, and implement a stable connection between the current collector 100 and the housing 500.

In addition, the second connection portion 131 is set to be located on the one side of the first connection region 120, so that the first connection region 120 does not occupy circumferential space of the second connection portion 131, and the second connection portion 131 does not occupy circumferential space of the first connection region 120. In this way, there is sufficient space for disposing the first connection region 120 and the second connection portion 131, to increase the areas of the first connection portion 121 and the second connection portion 131, and further increase the connection area between the first connection portion 121 and the jelly roll 200 and the connection area between the second connection portion 131 and the housing 500.

It should be noted that, the connecting piece 140 is disposed, so that fixed connection between the second connection portion 131 and the first connection region 120 is implemented, difficulty in connecting the second connection portion 131 and the first connection region 120 can be further reduced, and connection efficiency can be improved.

In a specific example, when the current collector 100 is produced, a structure between the second connection portion 131 and the middle portion 122 is cut to form the connecting piece 140, and the connecting piece 140 may be further bent to reduce molding difficulty of the current collector 100 and improve connection strength between the connecting piece 140 and the second connection portion 131 and the middle portion 122.

The range of the radial dimension of the orthographic projection of the spacing gap 150 on the plane perpendicular to the height direction of the battery cell 1000 is defined, so that the first connection portion 121 and the second connection portion 131 are movable relative to each other, and the areas of the first connection portion 121 and the second connection portion 131 can be ensured.

It can be learned from the foregoing structure that, in the current collector 100 according to embodiments of this application, the second connection portion 131 is disposed, and the second connection portion 131 is set to be connected to the middle portion 122 through the connecting piece 140, to implement electrical connection between the second connection portion 131 and the first connection portion 121. In this way, after the first connection portion 121 is connected to the jelly roll 200 and the second connection portion 131 is connected to the housing 500, electrical connection between the jelly roll 200 and the housing 500 can be implemented by using the current collector 100, to reduce difficulty in connecting the jelly roll 200 and the housing 500.

In addition, the first connection portion 121 and the inner peripheral wall of the second connection portion 131 are spaced apart to form the spacing gap 150, and the value of the radial dimension $G_1$ of the orthographic projection of the spacing gap 150 on the plane perpendicular to the height direction of the battery cell 1000 is set to range from 0.5 mm to 2 mm. When $G_1$ is less than 0.5 mm, a distance between the first connection portion 121 and the second connection portion 131 is small, and a technical problem that the first connection portion 121 and the second connection portion 131 cannot have relative displacement is prone to happening to some extent. In other words, the electrical connection between the jelly roll 200 and the housing cannot be implemented by using the current collector 100. When $G_1$ is greater than 2 mm, the area of the first connection portion 121 and/or the area of the second connection portion 131 are/is reduced. In other words, the connection area between the first connection portion 121 and the jelly roll 200 is reduced, and/or the connection area between the second connection portion 131 and the housing is reduced. As a result, the overcurrent capability of the current collector 100 is poor, and position stability after connection of the current collector 100 cannot be ensured.

Therefore, in this application, the radial dimension $G_1$ of the orthographic projection, of the spacing gap 150 that the first connection portion 121 and the inner peripheral wall of the second connection portion 131 are spaced apart to form, on the plane perpendicular to the height direction of the battery cell 1000 is set to range from 0.5 mm and 2 mm, so that it is ensured that the electrical connection between the jelly roll 200 and the housing can be effectively implemented through cooperation between the first connection portion 121 and the second connection portion 131, and the areas of the first connection portion 121 and the second connection portion 131 can be further ensured.

In other words, in this application, the distance between the first connection portion 121 and the second connection portion 131 is creatively set, so that it can be ensured that the first connection portion 121 and the second connection portion 131 is effectively separated, to facilitate adjustment of a relative position between the first connection portion 121 and the second connection portion 131, and allow the first connection region 120 and the second connection portion 131 to be movable relative to each other. In this way, it is ensured that the electrical connection between the jelly roll 200 and the housing 500 can be implemented on a premise that the current collector 100 does not need to be bent, to reduce bending processes, improve assembly efficiency, and avoid stress concentration caused by bending of the current collector 100, so as to avoid fracture of the current collector 100 and prolong a service life of the current collector 100. In addition, it can be further ensured that both the first connection portion 121 and the second connection portion 131 have sufficient connection areas, so that the electrical connection between the jelly roll 200 and the housing 500 can be effectively implemented by using the current collector 100, to improve working performance of the battery cell 1000.

In conclusion, in this application, the relative position between the first connection region 120 and the second connection portion 131 is creatively set, so that the electrical connection between the jelly roll 200 and the housing 500 can be implemented by using the current collector 100 without bending of a structure of the current collector 100, to improve connection efficiency, increase a capacity of the jelly roll 200, prolong the service life of the current collector 100, and improve structural strength of the current collector 100. In addition, manufacturing difficulty of the current collector 100 can be further reduced, and connection areas of the current collector 100 can be increased.

It will be understood that, the current collector 100 of this application is different from that in the related art in that the electrical connection between the jelly roll 200 and the housing 500 can be implemented without bending, so that the current collector 100 has a simple structure and high connection efficiency. In addition, this further helps increase the capacity of the jelly roll 200, avoids a possibility of poor soldering between the current collector 100 and the housing 500, and effectively ensures the connection area between the current collector 100 and the jelly roll 200 and the connection area between the current collector 100 and the housing 500.

In conclusion, in this application, the radial dimension of the orthographic projection of the spacing gap 150 between the first connection portion 121 and the inner peripheral wall of the second connection portion 131 on the plane perpendicular to the height direction of the battery cell 1000 is creatively set, so that the first connection region 120 and the second connection portion 131 are movable relative to each other, where being movable relative to each other herein will be understood as that the first connection region 120 is movable relative to the second connection portion 131, the second connection portion 131 is movable relative to the first connection region 120, or the first connection region 120 and the second connection portion 131 are movable relative to each other. In this way, in a process of connecting the current collector 100 and the housing 500, a problem that there is a soldering gap between the current collector 100 and the housing 500 due to a change in positions of the housing 500 and the jelly roll 200 can be avoided, and a problem that there is a soldering gap between the current collector 100 and the housing 500 due to a large difference in flatness of a plurality of soldering positions on the housing 500 or a large difference in flatness of the second connection portions 131 can be further avoided, to reduce the possibility of poor soldering between the current collector 100 and the housing 500, and ensure a yield rate of the battery cell 1000. It should be noted that, as a conductive element, the current collector 100 usually uses a metal conductive material such as copper, aluminum, or iron, and naturally has characteristics such as elasticity and deformation. The second connection portion 131 is disposed on the one side of the first connection region 120, so that a position change can occur between the first connection region 120 and the second connection portion 131 under an action of an external force. That is, when the housing 500 or a cover plate is mounted, the second connection portion 131 connected to the current collector 100 is pressed, so that the second connection portion 131 and the first connection region 120 are movable relative to each other.

Specifically, when flatness of a connection surface on which the housing 500 cooperates with the second connection portion 131 is large, the second connection portion 131 can adaptively adjust the relative position between the second connection portion 131 and the first connection portion 121 based on flatness of the housing 500, to further improve connection strength between the second connection portion 131 and the housing 500, and ensure a degree of adhesion between relative contact surfaces of the second connection portion 131 and the housing 500.

It will also be understood herein that, when the current collector 100 of this application is connected to the housing 500, the current collector 100 may absorb a manufacturing error of the housing 500 by using the second connection portion 131, to facilitate subsequent improvement of manufacturing precision of the battery cell 1000.

In other words, in this application, the first connection region 120 and the second connection portion 131 are set to be movable relative to each other, so that a gap between the current collector 100 and the housing 500 can be effectively avoided during connection of the current collector 100, to eliminate impact caused by an assembly error or the manufacturing error, further improve connection strength between the current collector 100 and the housing 500, and ensure a degree of adhesion between relative contact surfaces of the current collector 100 and the housing 500, so that the possibility of poor soldering is reduced, and the yield rate of the battery cell 1000 is subsequently ensured.

In a specific example, because the first connection region 120 and the second connection portion 131 are movable relative to each other, when the housing 500 and the jelly roll 200 are connected by using the current collector 100, the first connection region 120 may be connected to the jelly roll 200 first. Because the first connection region 120 and the second connection portion 131 are movable relative to each other, when the second connection portion 131 is connected to the housing 500 in this case, it can be ensured that a position of the second connection portion 131 can be changed based on a position, a shape, a surface structure, and the like of the housing 500, so that the second connection portion 131 can be effectively connected to the housing 500, to ensure connection strength and the connection area. In this way, the connection between the housing 500 and the jelly roll 200 is implemented by using the current collector 100, to reduce the possibility of poor soldering between the current collector 100 and the housing 500, and ensure the yield rate of the battery cell 1000.

The connection between the first connection region 120 and the jelly roll 200 and the connection between the second connection portion 131 and the housing 500 may be soldering, bonding, or the like.

Optionally, a material of the current collector 100 may be an aluminum alloy, pure copper, nickel-plated copper, or the like, so that the current collector 100 has a conductive function, to facilitate implementation of the electrical connection between the jelly roll 200 and the housing 500 by using the current collector 100.

In some examples, the jelly roll 200 includes a tab, and the plurality of first connection portions 121 are electrically connected to the tab, to implement electrical connection between the current collector 100 and the jelly roll 200.

It should be noted that the tab herein may be a flattened full-tab structure obtained through kneading or pressing, or may be a multi-tab structure obtained through laser cleaning or die-cutting.

When the material of the current collector 100 is the aluminum alloy, the current collector 100 is mainly connected to a positive tab of the jelly roll 200 in a cooperated manner. When the material of the current collector 100 is the pure copper or the nickel-plated copper, the current collector 100 is mainly connected to a negative tab of the jelly roll 200 in a cooperated manner. In other words, a person skilled in the art may select the material of the current collector 100 based on an application environment of the current collector 100. This is not specifically limited in this application.

In descriptions of this application, features limited by "first" and "second" may explicitly or implicitly include one or more such features, and are used to differentially describe the features without any sequence or weight.

In some examples, as shown in FIG. 1 and FIG. 2, the second connection portion 131 is located on a radially outer side of the first connection portion 121, to properly arrange the relative position between the first connection portion 121 and the second connection portion 131, and ensure the areas of the first connection portion 121 and the second connection portion 131.

In some specific examples, the radial dimension $G_1$ of the orthographic projection of the spacing gap 150 between the first connection portion 121 and the inner peripheral wall of the second connection portion 131 on the plane perpendicular to the height direction of the battery cell 1000 may be 0.5 mm, 1 mm, 1.5 mm, or 2 mm.

In some examples, the current collector 100 is an integrally formed member. In this way, the entire current collector 100 can be manufactured through an integral molding process, to reduce manufacturing difficulty of the current collector 100, improve manufacturing efficiency, and ensure connection strength and the connection quality between the middle portion 122, the first connection portion 121, and the second connection portion 131, so that the current collector 100 has a stable structure, and the electrical connection between the jelly roll 200 and the housing 500 is implemented by using the current collector 100.

It should be noted that, in a process of producing the current collector 100, the current collector 100 may be cut, to form structures such as the middle portion 122, the first connection portion 121, the second connection portion 131, and the like on the current collector 100.

In some embodiments of this application, as shown in FIG. 2, the first connection portion 121 and the connecting piece 140 are spaced apart in the circumferential direction of the current collector 100. Herein, it will be understood as that, when the current collector 100 is formed similar to the circular current collector 100, the first connection portion 121 and the connecting piece 140 are spaced apart in the circumferential direction of the current collector 100, so that the connecting piece 140 does not obstruct separation between the first connection portion 121 and the second connection portion 131. In other words, it is further ensured that the first connection portion 121 and the second connection portion 131 can be effectively separated, to facilitate adjustment of the relative position between the first connection portion 121 and the second connection portion 131, and ensure that the electrical connection between the jelly roll 200 and the housing 500 can be implemented on the premise that the current collector 100 does not need to be bent.

Optionally, a circumferential distance between the first connection portion 121 and the connecting piece 140 ranges from 0.5 mm to 2 mm. In other words, the distance between the first connection portion 121 and the connecting piece 140 in the circumferential direction of the current collector 100 ranges from 0.5 mm to 2 mm, so that the connecting piece 140 and the first connection portion 121 are spaced apart, and it is ensured that the relative position between the first connection portion 121 and the second connection portion 131 can be effectively adjusted. In this way, the first connection portion 121 and the second connection portion 131 are movable relative to each other, to facilitate implementation of the electrical connection between the jelly roll 200 and the housing 500 by using the current collector 100.

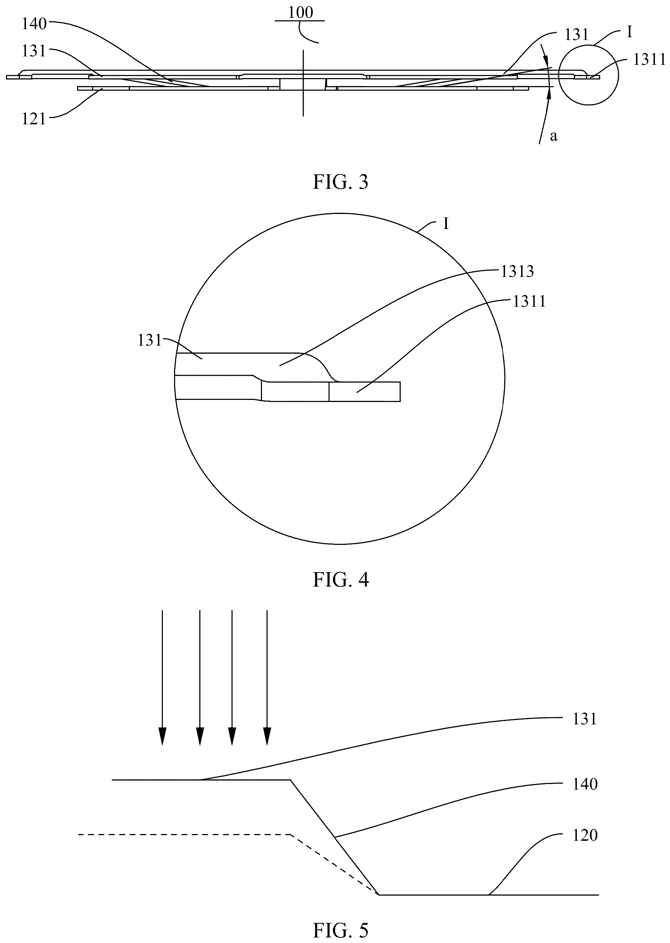

In some embodiments of this application, as shown in FIG. 1 and FIG. 3, the connecting piece 140 extends obliquely toward the second connection portion 131 relative to the middle portion 122, so that the first connection region 120 and the second connection portion 131 have a height difference. Herein, it will also be understood as that the connecting piece 140 is connected to the middle portion 122, is disposed obliquely relative to the middle portion 122, and extends obliquely toward the second connection portion 131. In this way, when the connecting piece 140 is used to implement fixed connection between the middle portion 122 and the second connection portion 131, it can be further ensured that the middle portion 122 and the second connection portion 131 are spaced apart in the height direction of the battery cell 1000 after being connected by using the connecting piece 140. In other words, the first connection region 120 and the second connection portion 131 have a height difference, to facilitate implementing the electrical connection between the jelly roll 200 and the housing 500 by using the current collector 100.

It should be noted that the foregoing height difference will be understood as that in the height direction of the battery cell 1000, the first connection region 120 and the second connection portion 131 are spaced apart. In other words, the first connection region 120 and the second connection portion 131 are disposed at different heights in the battery cell 1000.

It should be further noted that, in the conventional technology, the jelly roll 200 and the housing 500 are spaced apart. As a result, there is a specific height between the jelly roll 200 and the housing 500. In this application, the first connection region 120 and the second connection portion 131 are set to have a specific height difference. In this way, the current collector 100 can have a specific height, to implement the electrical connection between the jelly roll 200 and the housing 500 by using the current collector 100. In addition, increasing the height by bending the current collector 100 is avoided, so that bending processes are reduced, connection efficiency is improved, damage to the current collector 100 can be avoided, stress concentration caused by bending of the current collector 100 can be avoided, the service life of the current collector 100 is prolonged, and the structural strength of the current collector 100 is improved.

In addition, in this application, the first connection region 120 and the second connection portion 131 are directly set to have a specific height difference. Compared with increasing the height by bending the current collector, this can reduce space occupied by the current collector 100 in the height direction. In this way, a height of the jelly roll 200 can be correspondingly increased, to increase the capacity of the jelly roll 200, that is, to increase a capacity of the battery cell 1000.

In other words, in this application, the relative position between the first connection region 120 and the second connection portion 131 is creatively set, so that the electrical connection between the jelly roll 200 and the housing 500 can be implemented by using the current collector 100 without bending of the structure of the current collector 100, to improve connection efficiency, further avoid fracture of the current collector 100, prolong the service life of the current collector 100, and improve the structural strength of the current collector 100. In addition, manufacturing difficulty of the current collector 100 can be further reduced, and the capacity of the jelly roll 200 can be further increased.

In a specific example, because the first connection region 120 and the second connection portion 131 have a height difference, when the housing 500 and the jelly roll 200 are connected by using the current collector 100, the first connection region 120 may be connected to the jelly roll 200 first. Because the first connection region 120 and the second connection portion 131 have a height difference in the height direction of the battery cell 1000, after the first connection region 120 is connected to the jelly roll 200 in place, the second connection portion 131 may be disposed close to the housing 500 in a process of mounting the housing 500, to reduce difficulty in connecting the second connection portion 131 and the housing 500.

Optionally, the connecting piece 140 is a plate body. When the plate body extends obliquely relative to the first connection portion 121, it can be ensured that the connecting piece 140 is movable and/or deformable relative to the first connection portion 121 under an action of an external force. In this way, it is ensured that the first connection region 120 and the second connection portion 131 are movable relative to each other, to change the height of the current collector 100, and expand a use range of the current collector 100. It should be noted that, as a conductive element, the current collector 100 usually uses the metal conductive material such as copper, aluminum, or iron, and naturally has characteristics such as elasticity and deformation. The connecting piece 140 is constructed as an obliquely extending plate body, which is more conducive to implementing movement and/or deformation, and more conducive to relative movement adjustment of the position of the second connection portion 131.

The movement and/or the deformation described herein can be understood as that the connecting piece 140 is constructed to be movable relative to the first connection portion 121; or the connecting piece 140 is constructed to be deformable relative to the first connection portion 121; or the connecting piece 140 is constructed to be movable relative to the first connection portion 121 and deformable relative to the first connection portion 121, so that the height difference between the first connection portion 121 and the second connection portion 131 can be changed by using the connecting piece 140, and the first connection region 120 and the second connection portion 131 are movable relative to each other, to adjust a position of the second connection portion 131 relative to the first connection portion 121, that is, to adjust a relative position between the second connection portion 131 and the housing 500.

In conclusion, the first connection region 120 and the second connection portion 131 of this application have a height difference and are movable relative to each other, to facilitate implementation of the electrical connection between the jelly roll 200 and the housing 500 by using the current collector 100, and improve the capacity of the battery cell 1000.

In a specific example, because the first connection region 120 and the second connection portion 131 have a height difference and are movable relative to each other, when the housing 500 and the jelly roll 200 are connected by using the current collector 100, the first connection region 120 may be connected to the jelly roll 200 first. Because the first connection region 120 and the second connection portion 131 have a height difference in the height direction of the battery cell 1000, after the first connection region 120 is connected to the jelly roll 200 in place, the second connection portion 131 can be disposed close to the housing 500 in the process of mounting the housing 500, to reduce difficulty in connecting the second connection portion 131 and the housing 500. In addition, because the first connection region 120 and the second connection portion 131 are movable relative to each other, when the second connection portion 131 is connected to the housing 500 in this case, it can be ensured that the position of the second connection portion 131 can be changed based on the position, the shape, the surface structure, and the like of the housing 500, so that the second connection portion 131 can be effectively connected to the housing 500, to ensure connection strength and the connection area. In this way, the connection between the housing 500 and the jelly roll 200 is implemented by using the current collector 100, to reduce the possibility of poor soldering between the current collector 100 and the housing 500, and ensure the yield rate of the battery cell 1000.

In a specific example, the connecting piece 140 is formed as a rectangular plate, to facilitate implementing the fixed connection between the second connection portion 131 and the middle portion 122 through the connecting piece 140, and ensure that the second connection portion 131 can be located on a radially outer side of the first connection region 120 after the connection is completed, and the second connection portion 131 can drive the connecting piece 140 to act under an action of an external force.

Certainly, in some other examples, the connecting piece 140 may be further formed as a square plate, a sector-shaped plate, or the like. This is not specifically limited in this application.

In a specific example, because the connecting piece 140 is movable and/or deformable relative to the first connection portion 121, when the current collector 100 is used to separately connect to the jelly roll 200 and the housing 500, if the housing 500 has the manufacturing error, a soldering position protruding toward the jelly roll 200 generates a force that drives a corresponding second connection portion 131 to move toward the jelly roll 200. Because the second connection portion 131 is connected to the first connection portion 121 by using the obliquely extending plate body, and the obliquely extending plate body is prone to a position change or deformation under an action of an external force, when the housing 500 drives the corresponding second connection portion 131 to move toward the jelly roll 200, the second connection portion 131 can drive the obliquely extending plate body to act, so as to ensure that the second connection portion 131 can effectively move, that is, to ensure that the second connection portion 131 can change a position based on the position of the housing 500, so that the second connection portion 131 can be connected to the housing 500, and a cooperation gap between the second connection portion 131 and the housing 500 is avoided. In this way, the degree of adhesion between the relative contact surfaces of the current collector 100 and the housing 500 is ensured, and the possibility of poor soldering is reduced.

It should be noted that, as described above, the second connection portion 131 can drive the obliquely extending plate body to act, and a specific action of the plate body may be as follows: The second connection portion 131 drives one end that is of the plate body and that is connected to the second connection portion 131 to move toward the jelly roll 200, and in a moving process of the one end of the plate body, the other end of the plate body is fixed relative to the jelly roll 200, to prompt the entire plate body to rotate toward the jelly roll 200, and implement movement of the connecting piece 140 relative to the first connection portion 121. Alternatively, the second connection portion 131 drives the one end that is of the plate body and that is connected to the second connection portion 131 to bend toward the jelly roll 200, and in a bending process, the other end of the plate body may be fixed relative to the jelly roll 200, to implement deformation of the connecting piece 140 relative to the first connection portion 121.

FIG. 5 is a schematic diagram of the second connection portion 131 before and after movement. A solid line part indicates a position of the second connection portion 131 before movement, and a dashed line part indicates a position of the second connection portion 131 after movement.

Optionally, the connecting piece 140 is made of a conductive material such as aluminum or copper. The connection between the first connection region 120 and the second connection portion 131 is implemented by using the connecting piece 140, and it is ensured that the second connection portion 131 can effectively drive the obliquely extending connecting piece 140 to act under an action of an external force, that is, the connecting piece 140 is effectively movable and/or deformable relative to the first connection region 120, so as to change the height difference between the first connection region 120 and the second connection portion 131.

It should be noted that a specific length, width, and thickness of the connecting piece 140 are not limited in this application, provided that it is ensured that the connecting piece 140 can be used to effectively implement the connection between the first connection region 120 and the second connection portion 131, and the second connection portion 131 can effectively drive the obliquely extending connecting piece 140 to act under an action of an external force.

Certainly, in some other examples, the connecting piece 140 may alternatively be a buffer spring. One end of the buffer spring is connected to the second connection portion 131, and the other end of the buffer spring is connected to the first connection region 120. This also allows the connecting piece 140 to be constructed to be movable relative to the first connection region 120 and/or deformable relative to the first connection region 120, so as to change the height difference between the first connection region 120 and the second connection portion 131.

In a specific example, when the connecting piece 140 is a buffer spring, and the current collector 100 is used to separately connect to the jelly roll 200 and the housing 500, if there is a large difference in flatness of the plurality of soldering positions on the housing 500, the soldering position protruding toward the jelly roll 200 generates the force that drives the corresponding second connection portion 131 to move toward the jelly roll 200, and the second connection portion 131 compresses the buffer spring to prompt the buffer spring to deform, so as to change the height difference between the first connection region 120 and the second connection portion 131.

In some examples, as shown in FIG. 1 and FIG. 3, a range of an inclination angle of the connecting piece 140 relative to the middle portion 122 is 5°≤a<90°. When the range of the inclination angle of the connecting piece 140 relative to the middle portion 122 is less than 5°, an overall height of the current collector 100 is low, and consequently, the current collector 100 cannot be used to effectively implement the electrical connection between the jelly roll 200 and the housing 500. When the range of the inclination angle of the connecting piece 140 relative to the middle portion 122 is greater than or equal to 90°, the overall height of the current collector 100 is high, and consequently, the current collector 100 occupies large space. As a result, the current collector 100 occupies layout space of the jelly roll 200, which leads to reduction in the capacity of the jelly roll 200. In addition, the connecting piece 140 cannot effectively drive the second connection portion 131 to move. In other words, the connecting piece 140 cannot be used to effectively change the height difference between the first connection region 120 and the second connection portion 131. As a result, the problem of poor soldering caused by the manufacturing error cannot be resolved.

Therefore, in this application, the range of the inclination angle a of the connecting piece 140 relative to the middle portion 122 is set to 5°≤a<90°, so that it is ensured that the electrical connection between the jelly roll 200 and the housing 500 can be effectively implemented by using the current collector 100, the height difference between the first connection region 120 and the second connection portion 131 can be further effectively changed by using the connecting piece 140, and the overall height of the current collector 100 is not excessively high, to ensure the capacity of the jelly roll 200.

In a specific example, the inclination angle a of the connecting piece 140 relative to the middle portion 122 may be 5°, 10°, 20°, 30°, 40°, 50°, 60°, 70°, 80°, or the like.

Optionally, a height between the first connection region 120 and the second connection portion 131 ranges from 1 mm to 10 mm. A specific value of the height between the first connection region 120 and the second connection portion 131 may be adjusted based on the inclination angle a of the connecting piece 140. The height between the first connection region 120 and the second connection portion 131 is set to range from 1 mm to 10 mm, so that it can be ensured that the inclination angle a of the connecting piece 140 relative to the first connection portion 121 can be in a range of 5° to 90°. In this way, it is ensured that the height difference between the first connection region 120 and the second connection portion 131 can be effectively changed by using the connecting piece 140, and the overall height of the current collector 100 is not excessively high, to ensure the capacity of the jelly roll 200.

In a specific example, the height between the first connection region 120 and the second connection portion 131 may be 1 mm, 3 mm, 5 mm, 8 mm, 10 mm, or the like.

It should be noted that the foregoing height between the first connection region 120 and the second connection portion 131 will be understood as a distance, in the height direction of the battery cell 1000, between surfaces that are of the second connection portion 131 and the first connection portion 121 and that face each other.

Optionally, as shown in FIG. 1 and FIG. 2, there are a plurality of connecting pieces 140, the plurality of connecting pieces 140 are evenly spaced apart, and each connecting piece 140 is formed as an obliquely extending flat plate. The plurality of connecting pieces 140 are disposed, and the plurality of connecting pieces 140 may cooperate to increase connection strength between the second connection portion 131 and the middle portion 122, so that the position of the second connection portion 131 is stable, and it is ensured that the second connection portion 131 and the first connection region 120 can have the height difference and are movable relative to each other.

Specifically, with reference to FIG. 1 and FIG. 2, the first connection region 120 includes the middle portion 122 and the plurality of first connection portions 121. The middle portion 122 is formed as a circular aluminum plate or a circular copper plate, and the first connection portion 121 is formed as a sector-shaped aluminum plate or a sector-shaped copper plate. The plurality of first connection portions 121 are disposed around an outer periphery of the middle portion 122 and are separately connected to the middle portion 122, and the plurality of first connection portions 121 are spaced apart. A connecting piece 140 formed as a rectangular aluminum plate or a rectangular copper plate is disposed between two adjacent first connection portions 121. In a circumferential direction of the first connection region 120, the connecting piece 140 and the first connection portion 121 are spaced apart, and a first end that is of the connecting piece 140 and that is in a radial direction of the first connection region 120 is connected to the middle portion 122.

With reference to FIG. 1 and FIG. 2, the second connection portion 131 is formed as an annular aluminum plate or an annular copper plate, the second connection portion 131 is disposed around the outer periphery of the first connection region 120, a second end that is of the connecting piece 140 and that is in the radial direction of the first connection region 120 is connected to the second connection portion 131, and the connecting piece 140 extends obliquely relative to the first connection region 120, so that the first connection region 120 and the second connection portion 131 are spaced apart in the height direction of the battery cell 1000.

In a specific example, when the current collector 100 is used to separately connect to the jelly roll 200 and the housing 500, the first connection region 120 is connected to the jelly roll 200 first. Because the first connection region 120 and the second connection portion 131 have a height difference in the height direction of the battery cell 1000, in the process of mounting the housing 500, the housing 500 can effectively be in contact with and cooperate with the second connection portion 131. In addition, in a process of connecting the housing 500 to the second connection portion 131, if there is a soldering position protruding toward the jelly roll 200 on the housing 500, the soldering position drives the second connection portion 131 to move toward the jelly roll 200, and the second connection portion 131 drives the second end of the connecting piece 140 to rotate around the first end toward the jelly roll 200 or drives the second end of the connecting piece 140 to bend toward the jelly roll 200, so as to use the housing 500 to drive the connecting piece 140 to move and/or deform relative to the first connection region 120, so that the height of the current collector 100 is changed, the current collector 100 can be effectively connected to the housing 500, the degree of adhesion between the relative contact surfaces of the current collector 100 and the housing 500 is ensured, and the possibility of poor soldering is reduced.

Optionally, as shown in FIG. 1 and FIG. 2, the plurality of first connection portions 121 and the plurality of connecting pieces 140 are alternately distributed in the circumferential direction of the current collector 100. Herein, it will also be understood as that, when the current collector 100 is formed as a circular current collector, the plurality of first connection portions 121 and the plurality of connecting pieces 140 are alternately spaced apart in the first connection region 120 in the circumferential direction of the current collector 100. Being alternately spaced apart means that one connecting piece 140 is disposed between two adjacent first connection portions 121, and correspondingly, one first connection portion 121 is disposed between two adjacent connecting pieces 140, to properly utilize space of the current collector 100, so that the plurality of first connection portions 121 and the plurality of connecting pieces 140 can be disposed on the same current collector 100 at the same time. This facilitates increasing an overcurrent area of the current collector 100 by using the plurality of first connection portions 121, and ensures that the second connection portion 131 can be connected to the middle portion 122 by using the connecting piece 140.

In some examples, as shown in FIG. 2, the plurality of first connection portions 121 are spaced apart in the circumferential direction of the current collector 100, and the connecting piece 140 is disposed between two adjacent first connection portions 121, so that the plurality of first connection portions 121 and the plurality of connecting pieces 140 can be disposed alternately in the circumferential direction of the middle portion 122, and the plurality of first connection portions 121 and the plurality of connecting pieces 140 are disposed on the current collector 100 at the same time.

In some examples, as shown in FIG. 2, a spacing between opposing sidewalls of each first connection portion 121 gradually increases in a direction away from the middle portion 122. In this way, the area of the first connection portion 121 is increased, to ensure that the first connection portion 121 has a sufficient connection area with the tab of the jelly roll 200, so as to ensure that the current collector 100 has a large overcurrent area, and avoid insufficient overcurrents of the jelly roll 200 caused by a small overcurrent area of the current collector 100. This further avoids a problem of serious heat generation of the jelly roll 200, to prolong the service life of the jelly roll 200 and improve use safety of the jelly roll 200.

In some examples, the first connection portion 121 may form a sector shape in FIG. 2. The sector shape allows the spacing between the opposite sidewalls of the first connection portion 121 to gradually increase in the direction away from the middle portion 122, so as to increase the area of the first connection portion 121.

Certainly, in some other examples, the first connection portion 121 may alternatively form a triangle, a rectangle, a circle, or the like. This is not specifically limited in this application.

Optionally, as shown in FIG. 2, a value of a

radius $R_1$ of the current collector 100 ranges from 10 mm to 100 mm. Because the orthographic projection of the outer peripheral wall of the current collector 100 on the plane perpendicular to the thickness direction of the current collector 100 is located on the first circle, the radius of the current collector 100 is directly defined to ensure that a size of the current collector 100 can be adapted to those of the jelly roll 200 and the housing 500, so as to facilitate implementation of the electrical connection between the jelly roll 200 and the housing 500 by using the current collector 100, and ensure that the current collector 100 has sufficient connection areas with the jelly roll 200 and the housing 500.

Certainly, in some other examples, the radius of the current collector 100 is not limited to 10 mm to 100 mm, and a person skilled in the art may define the radius of the current collector 100 based on actual areas of the jelly roll 200 and the housing 500, to ensure that the current collector 100 has sufficient connection areas with the jelly roll 200 and the housing 500.

Optionally, as shown in FIG. 2, orthographic projections of outer peripheral walls of the plurality of first connection portions 121 on the first plane are all located on a second circle, and a radius $R_2$ of the second circle and the radius $R_1$ of the current collector 100 meet the following condition: $\frac{1}{2}R_1 \leq R_2 < R_1$. It should be noted that, because the first plane is perpendicular to the thickness direction of the current collector 100, the orthographic projections of the outer peripheral walls of the plurality of first connection portions 121 on the first plane are set to be all located on the second circle, so that the first connection region 120 forms a shape similar to a circular disk. The circular disk shape allows the shape of the current collector 100 to be adapted to the shape of the jelly roll 200, so as to reduce difficulty in connecting the current collector 100 and the jelly roll 200, increase the connection area, and ensure connection quality.

$R_2$ is set to be less than $R_1$, to facilitate reservation of specific layout space for the second connection portion 131, so that it is ensured that the second connection portion 131 has a specific area, to increase the connection area between the second connection portion 131 and the housing 500. $R_2$ is set to be greater than or equal to $\frac{1}{2}R_1$, so that it can be ensured that the first connection region 120 has a specific area, to increase the connection area between the first connection region 120 and the jelly roll 200.

In other words, in this application, a relationship between $R_2$ and $R_1$ is set, to ensure that both the first connection portion 121 and the second connection portion 131 have specific connection areas, so that fixed connection between the current collector 100 and the jelly roll 200 and fixed connection between the current collector 100 and the housing 500 are implemented, and it can be ensured that the current collector 100 has a large overcurrent area.

In some specific examples, with reference to FIG. 1 and FIG. 2, the middle portion 122 forms a circular support plate, the plurality of first connection portions 121 are all formed as sector-shaped connection plates, and the plurality of first connection portions 121 are connected to a radially outer side of the middle portion 122 and are spaced apart in the circumferential direction of the middle portion 122. In this way, after connection between the plurality of first connection portions 121 and the middle portion 122 is completed, the first connection region 120 may form a circular disk shape, so that the first connection region 120 is adapted to the shape of the jelly roll 200, to increase the connection area between the first connection region 120 and the jelly roll 200.

Optionally, as shown in FIG. 3, a radius of the middle portion 122 is $R_3$, and $5\,mm < R_3 < \frac{1}{2}R_2$. It should be noted that the radius of the middle portion 122 herein will also be understood as a radial dimension of the middle portion 122 in a case in which the middle portion 122 is formed as the circular support plate. Because a radius of the first connection region 120 is a fixed value, a relationship between the radius $R_3$ of the middle portion 122 and $R_2$ is set, to ensure that both the first connection portion 121 and the middle portion 122 have specific connection areas, so as to implement the fixed connection between the current collector 100 and the jelly roll 200, and ensure that the current collector 100 has a large overcurrent area.

In some embodiments of this application, as shown in FIG. 1 and FIG. 2, the second connection portion 131 forms an annular structure, and the inner peripheral wall of the second connection portion 131 is connected to the middle portion 122 by using the connecting piece 140. The inner peripheral wall of the second connection portion 131 described herein will be understood as a peripheral wall that is of the second connection portion 131 and that is close to the first connection region 120. The inner peripheral wall of the second connection portion 131 is connected to the middle portion 122 by using the connecting piece 140, to implement the fixed connection between the second connection portion 131 and the middle portion 122, so as to facilitate supporting the second connection portion 131 by using the middle portion 122, improve position stability of the second connection portion 131, and facilitate implementation of the electrical connection between the current collector 100 and the housing 500 by using the second connection portion 131.

It should be noted that, the second connection portion 131 is set to form the annular structure, with the annular structure, the second connection portion 131 may be set to extend in the circumferential direction of the first connection region 120, so as to ensure the area of the second connection portion 131. In addition, the annular structure may further increase structural strength of the second connection portion 131 and prolong a service life of the second connection portion 131.

In addition, the second connection portion 131 forms the annular structure, so that the second connection portion 131 is formed as an integrated piece, to facilitate processing of the second connection portion 131, and reduce manufacturing difficulty of the second connection portion 131.

In addition, the second connection portion 131 is set to form the annular structure, so that in a process of connecting the second connection portion 131 to the housing 500, an entire circumference of the second connection portion 131 can be connected to the housing 500 without disposition of a separate error correction mechanism, to reduce difficulty in connecting the second connection portion 131 and the housing 500.

In other words, in this application, the second connection portion 131 is set to be of the annular structure, so that the second connection portion 131 has a large connection area, and the structural strength of the second connection portion 131 can be improved, to prolong the service life of the second connection portion 131, reduce manufacturing difficulty of the second connection portion 131, and reduce difficulty in connecting the second connection portion 131 and the housing 500.

In a specific example, the second connection portion 131 is formed as an annular plate, and the annular plate is made of a conductive material such as aluminum or copper, to facilitate implementation of the electrical connection between the second connection portion 131 and the housing 500.

In some examples, an inner diameter of the second connection portion 131 is greater than an outer diameter of the first connection region 120, so that the second connection portion 131 is set to be located on the radially outer side of the first connection region 120, to increase the areas of the first connection portion 121 and the second connection portion 131.

Optionally, as shown in FIG. 2, a radial width of the second connection portion 131 is $W_1$, 1 mm$\leq W_1 \leq \frac{1}{2}R_1$, and $R_1$ indicates the radius of the current collector 100. The radial width of the second connection portion 131 described herein will be understood as a width of extension of the second connection portion 131 in a radial direction of the current collector 100 in a case in which the current collector 100 forms the shape similar to the circle. In some examples, the second connection portion 131 is disposed on the radially outer side of the first connection portion 121, and the radius of the current collector 100 is fixed. Therefore, through the foregoing disposition, it is ensured that the connection area of the second connection portion 131 can meet a minimum connection requirement and the first connection portion 121 has a sufficient connection area, so as to facilitate implementation of the electrical connection between the jelly roll 200 and the housing 500 by using the current collector 100.

In some embodiments of this application, the first connection portion 121 has a first surface connected to the jelly roll 200, the second connection portion 131 has a second surface connected to the housing 500, and the first surface and the second surface are parallel to each other. Herein, it will be understood as that the first connection portion 121 has the first surface, and the first connection portion 121 is adapted to be connected to the jelly roll 200 through the first surface, so as to implement the electrical connection between the first connection portion 121 and the jelly roll 200. Correspondingly, the second connection portion 131 has the second surface, and the second connection portion 131 is adapted to be connected to the housing 500 through the second surface, so as to implement the electrical connection between the second connection portion 131 and the housing 500, and implement the electrical connection between the jelly roll 200 and the housing 500 by using the current collector 100.

It should be noted that, in a process of assembling the battery cell 1000, a side surface that is of the jelly roll 200 and that faces the housing 500 is usually set in parallel with a side surface that is of the housing 500 and that faces the jelly roll 200. Therefore, in this application, the first surface and the second surface are set in parallel, so that it can be ensured that the second surface can be effectively connected to the housing 500 after connection between the first surface and the jelly roll 200 is completed, to ensure the connection area between the first connection region 120 and the jelly roll 200, and ensure the connection area between the second connection portion 131 and the housing 500, so as to effectively implement the electrical connection between the jelly roll 200 and the housing 500, and reduce connection difficulty.

In some examples, a surface that is of the first connection portion 121 and that faces the jelly roll 200 is defined as the first surface, to facilitate implementation of the interconnection between the first surface and the jelly roll 200. Correspondingly, a surface that is of the second connection portion 131 and that faces the cover plate 300 is defined as the second surface, to facilitate implementation of the interconnection between the second surface and the housing 500.

In some embodiments of this application, as shown in FIG. 1, FIG. 2, and FIG. 4, the second connection portion 131 is provided with a stop protrusion 1313. The stop protrusion 1313 extends toward the first connection portion 121. The stop protrusion 1313 is located on a radially outer side of the first connection portion 121. The stop protrusion 1313 is adapted to be located on a radially outer side of the tab of the jelly roll 200. The radially outer side of the first connection portion 121 described herein will be understood as a side that is of the first connection portion 121 and that is close to a radially outer side of the current collector 100 in a case in which the current collector 100 forms the shape similar to the circle. The stop protrusion 1313 may play a role of reinforcing the second connection portion 131, that is, improving the structural strength of the second connection portion 131, to avoid deformation when the second connection portion 131 is connected to the housing 500, so as to ensure that the second connection portion 131 can be stably connected to the housing 500. In addition, the stop protrusion 1313 facilitates defining a position of the tab by using the second connection portion 131, so that the tab can be stably disposed on the jelly roll 200, to prevent a failure of the jelly roll 200 due to loosening of the tab and pulling of a soldering seam under an actual working condition.

Besides, the position of the tab may be further defined through cooperation of the stop protrusion 1313, to further ensure that the tab can be stably disposed on the jelly roll 200. In addition, a plurality of stop protrusions 1313 may cooperate to further protect the tab, so as to prolong a service life of the tab, that is, to prolong the service life of the jelly roll 200.

Optionally, as shown in FIG. 1 and FIG. 2, the stop protrusion 1313 extends in a circumferential direction of the second connection portion 131, which will also be understood as that the stop protrusion 1313 extends in the circumferential direction of the current collector 100 that forms a circular shape, to increase an area of the stop protrusion 1313, and ensure that the stop protrusion 1313 can effectively improve the structural strength of the second connection portion 131. In addition, it can be further ensured that the stop protrusion 1313 can effectively define the position of the tab, to further ensure that the tab can be stably disposed on the jelly roll 200.

Certainly, in some other examples, there are a plurality of stop protrusions 1313, and the plurality of stop protrusions 1313 are spaced apart in the circumferential direction of the second connection portion 131. In this way, the stop protrusion 1313 can also be used to improve the structural strength of the second connection portion 131 and define the position of the tab.

Optionally, a length of extension of the stop protrusion 1313 toward the first connection portion 121 is greater than or equal to an exposure height of the tab, to ensure that the stop protrusion 1313 can effectively protect the tab and define the position of the tab.

In a specific example, the exposure height of the tab ranges from 0.5 mm to 2 mm. In other words, the length of extension of the stop protrusion 1313 toward the first connection portion 121 is greater than 0.5 mm.

Optionally, the stop protrusion 1313 is defined through bending and deformation of a part of the second connection portion 131. In other words, in a process of manufacturing the second connection portion 131, a part of a structure of the second connection portion 131 is bent and deformed to form the stop protrusion 1313. In this way, there is no need to separately connect a structural member to the second connection portion 131 to form the stop protrusion 1313, so as to reduce manufacturing difficulty of the stop protrusion 1313, that is, to reduce manufacturing difficulty of the second connection portion 131. In addition, position stability of the stop protrusion 1313 can be further improved.

In some embodiments of this application, as shown in FIG. 1 and FIG. 2, a plurality of avoidance ports 1312 for fluid flow are further provided on an outer periphery of the second connection portion 131. The avoidance port 1312 is configured to implement communication between two opposite ends of the second connection portion 131, so as to ensure that gas in the jelly roll 200 can flow smoothly.

In other words, the avoidance port 1312 of this application is adapted to form an exhaust passage.

Optionally, as shown in FIG. 2, the plurality of avoidance ports 1312 are evenly spaced apart, so that the plurality of avoidance ports 1312 can cooperate to ensure that gas distribution in the jelly roll 200 can be more even.

It should be noted that FIG. 2 shows that the avoidance port 1312 forms a shape similar to a rectangle. In some other examples, the avoidance port 1312 may alternatively form a circle, a triangle, or the like. This is not specifically limited in this application.

It should be further noted that a specific quantity of the plurality of avoidance ports 1312 is not limited in this application, and a person skilled in the art may set the quantity based on a gas production amount in the jelly roll 200.

Optionally, a width of the avoidance port 1312 is $W_2$, and 0.5 mm$\leq W_2 \leq$5 mm. It should be noted that the width of the avoidance port 1312 described herein will be understood as a width of extension of the avoidance port 1312 in the radial direction of the current collector 100. When $W_2$<0.5 mm, a gas exhausting capability of the avoidance port 1312 is reduced. When $W_2$>5 mm, man-ufacturing difficulty of the avoidance port 1312 is increased, and the connection area between the second connection portion 131 and the housing 500 is affected.

Therefore, in this application, the radial width $W_2$ of the avoidance port 1312 is set to be greater than or equal to 0.5 mm and less than or equal to 5 mm, so that it is ensured that gas in the jelly roll 200 can be smoothly exhausted from the avoidance port 1312, and it can be further ensured that the avoidance port 1312 can be better formed. In addition, the area of the second connection portion 131 is ensured, that is, the connection area between the second connection portion 131 and the housing 500 is ensured.

Optionally, as shown in FIG. 1 and FIG. 2, a reinforcement portion 1311 is provided on an outer periphery of the stop protrusion 1313. The reinforcement portion 1311 is configured to improve structural strength of the stop protrusion 1313 and the second connection portion 131, and avoid deformation when the second connection portion 131 is connected to the housing 500, and can further ensure that the stop protrusion 1313 can effectively protect the tab and define the position of the tab.

Optionally, as shown in FIG. 2, FIG. 3, and FIG. 4, there are a plurality of reinforcement portions 1311, and the plurality of reinforcement portions 1311 are spaced apart. The plurality of reinforcement portions 1311 cooperate to improve the structural strength of the stop protrusion 1313 and the second connection portion 131 to a greatest extent.

Optionally, as shown in FIG. 2 and FIG. 3, the avoidance port 1312 is formed between two adjacent reinforcement portions 1311. In other words, it only requires spacing two adjacent reinforcement portions 1311 apart, so that two adjacent reinforcement portions 1311 cooperate to provide the avoidance port 1312 on the outer periphery of the second connection portion 131, without a need to separately process the second connection portion 131 to form the avoidance port 1312. This reduces manufacturing difficulty of the avoidance port 1312, that is, reduces manufacturing difficulty of the second connection portion 131, and can further improve manufacturing efficiency of the second connection portion 131.

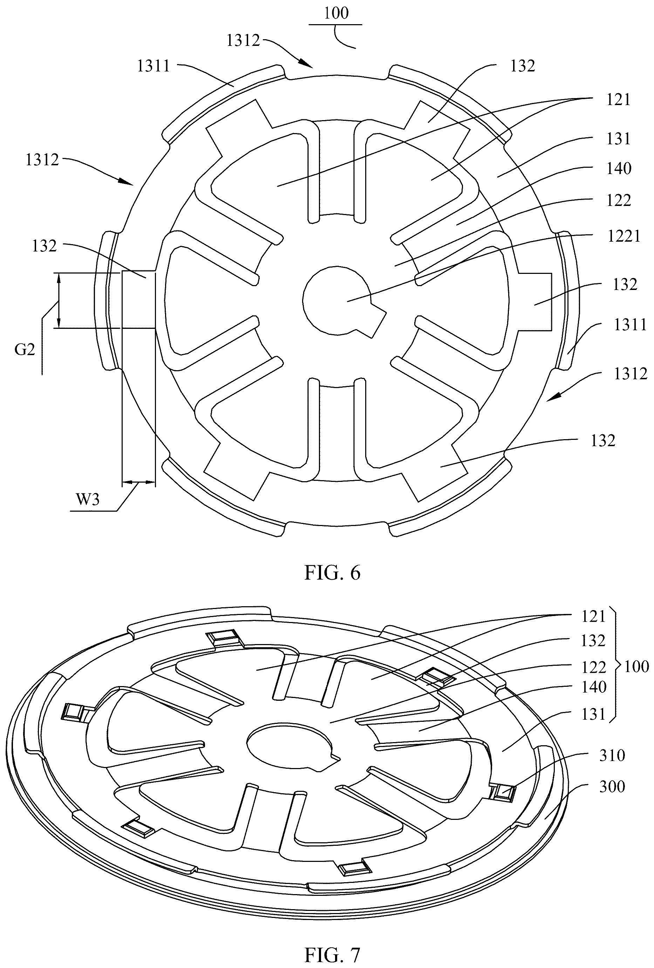

Optionally, as shown in FIG. 6 and FIG. 7, a first limiting portion 132 is provided on the second connection portion 131, and the first limiting portion 132 is adapted to be in limiting fit with a second limiting portion 310 on the housing 500. In other words, the second limiting portion 310 is provided on the housing 500, and the first limiting portion 132 is provided on the second connection portion 131. After the second limiting portion 310 and the first limiting portion 132 are in limiting fit, limiting cooperation between the second connection portion 131 and the housing 500 can be implemented, to avoid a change in the relative position between the second connection portion 131 and the housing 500 in a connecting process, so as to reduce difficulty in connecting the second connection portion 131 and the housing 500, and improve connection efficiency.

Optionally, as shown in FIG. 6 and FIG. 7, in the circumferential direction of the second connection portion 131, there are a plurality of first limiting portions 132, and the plurality of first limiting portions 132 and the plurality of avoidance ports 1312 are alternately provided. In this way, reduction in the structural strength of the second connection portion 131 due to providing of the plurality of first limiting portions 132 and the plurality of avoidance ports 1312 is avoided. In other words, it is ensured that the second connection portion 131 has specific structural strength, to prolong the service life of the second connection portion 131, and further facilitate implementing the fixed connection between the second connection portion 131 and the housing 500, that is, to implement the fixed connection between the current collector 100 and the housing 500, so as to improve position stability of the current collector 100.

In some examples, as shown in FIG. 6, the avoidance port 1312 is aligned with the reinforcement portion 1311, so that reduction in the structural strength due to providing of the avoidance port 1312 on the second connection portion 131 is avoided, and the structural strength of the second connection portion 131 is ensured.

Optionally, the first limiting portion 132 is a limiting port that extends through the second connection portion 131 in a thickness direction of the second connection portion 131. Herein, the first limiting portion 132 is a limiting port, and the limiting port extends through the second connection portion 131 in the thickness direction of the second connection portion 131, to facilitate implementing the limiting cooperation between the second connection portion 131 and the housing 500 by using the limiting port.

Optionally, the second limiting portion 310 is a limiting protrusion, and the limiting protrusion is provided on the housing 500 and extends toward the current collector 100, to ensure that the limiting protrusion can perform limiting cooperation in the limiting port, so as to implement the limiting cooperation between the second connection portion 131 and the housing 500 through cooperation between the first limiting portion 132 and the second limiting portion 310.

Optionally, as shown in FIG. 6, the second connection portion 131 forms the annular structure, an orthographic projection of the limiting port on the first plane forms a rectangle, a circumferential length of the limiting port is $G_2$, $0.5 \text{ mm} \leq G_2 \leq \pi R_1/n_1$, $R_1$ indicates the radius of the current collector 100, $n_1$ indicates a quantity of limiting ports, $\pi$ indicates a ratio of a circumference of a circle to its diameter, and $\pi \approx 3.14$. The circumferential length of the limiting port described herein will be understood as a length of extension of the limiting port in the circumferential direction of the second connection portion 131, so that it is ensured that the limiting port has a specific extension length to cooperate with the limiting protrusion, and excessive reduction in the area of the second connection portion 131 due to providing of the limiting port can be further avoided. In other words, the second connection portion 131 has a specific connection area with the housing 500, to facilitate implementation of the fixed connection between the current collector 100 and the housing 500.

It should be noted that FIG. 6 shows a case in which the orthographic projection of the limiting port on the first plane forms a rectangle. In some other examples, the orthographic projection of the limiting port on the first plane forms a square, a triangle, a sector shape, or the like.

Optionally, as shown in FIG. 6, a radial width $W_3$ of the limiting port meets the following condition: $0.5 \text{ mm} \leq W_3 < W_1$, where the radial width of the second connection portion 131 is $W_1$. In other words, the first limiting portion 132 has a specific width in the radial direction of the current collector 100 that forms the circular shape, to facilitate formation of the first limiting portion 132, and facilitate implementing positioning cooperation between the second connection portion 131 and the housing 500 by using the first limiting portion 132. In addition, the radial width of the first limiting portion 132 is set to be less than the radial width of the second connection portion 131, so that reduction in the structural strength and the connection area of the second connection portion 131 due to providing of the first limiting portion 132 can be avoided, to ensure that the second connection portion 131 has specific structural strength, prolong the service life, and ensure that the second connection portion 131 has a specific connection area with the housing 500.

Optionally, as shown in FIG. 7, there are a plurality of first limiting portions 132, and the plurality of first limiting portions 132 are provided in one-to-one alignment with the plurality of first connection portions 121 in a radial direction of the second connection portion 131. The plurality of first limiting portions 132 are provided, to ensure that positioning cooperation between the second connection portion 131 and the housing 500 can be effectively performed. The plurality of first limiting portions 132 are provided in one-to-one alignment with the plurality of first connection portions 121, so that the first limiting portion 132 can be provided away from the connecting piece 140, to prevent the first limiting portion 132 from affecting the fixed connection between the second connection portion 131 and the middle portion 122. In other words, it is ensured that the first limiting portion 132 can be used to effectively implement positioning cooperation between the second connection portion 131 and the cover plate 300, and it can be further ensured that the fixed connection between the second connection portion 131 and the middle portion 122 can be effectively performed, so as to ensure position stability and the structural strength of the current collector 100.

In some embodiments of this application, as shown in FIG. 1 and FIG. 2, the middle portion 122 is provided with a liquid injection port 1221 that extends through the middle portion 122 in a thickness direction of the middle portion 122. Herein, the middle portion 122 is provided with the liquid injection port 1221, and the liquid injection port 1221 extends through the middle portion 122 in the thickness direction of the middle portion 122, to implement communication between two sides of the middle portion 122 in the thickness direction, so as to facilitate liquid injection into the jelly roll 200 through the liquid injection port 1221.

In other words, when the current collector 100 of this application is electrically connected to the jelly roll 200, it can also be ensured that liquid can be normally injected into the jelly roll 200.

In addition, the liquid injection port 1221 is provided on the middle portion 122, so that the liquid injection port 1221 can be provided close to a middle portion of the jelly roll 200, to facilitate liquid injection into the jelly roll 200 through the liquid injection port 1221.

Optionally, as shown in FIG. 1, the liquid injection port 1221 includes a penetration port 1222 and a positioning port 1223 that communicate with each other. The penetration port 1222 facilitates liquid injection into the jelly roll 200. The positioning port 1223 is adapted to cooperate with a tooling device to avoid rotation of the current collector 100 in a mounting process. Through the foregoing arrangement, it can be ensured that the liquid injection port 1221 facilitates liquid injection into the jelly roll 200, and also facilitates positioning connection between the current collector 100 and the jelly roll 200, to reduce difficulty in connecting the current collector 100 and the jelly roll 200 and improve connection efficiency. In addition, accuracy of the connection between the current collector 100 and the jelly roll 200 can be further ensured.

In addition, the positioning port 1223 can further prevent the current collector 100 from rotating relative to the jelly roll 200, to improve position stability of the current collector 100.

In a specific example, the penetration port 1222 is formed as a circular port, to facilitate liquid injection into the jelly roll 200 through the penetration port 1222 and ensure a liquid injection amount. The positioning port 1223 is formed as a rectangular port, so that the positioning port 1223 is used to cooperate with the tooling device to avoid rotation of the current collector 100 in the mounting process, and reduce mounting difficulty of the current collector 100.

The following describes a battery cell 1000 in embodiments of this application with reference to the accompanying drawings of this specification.

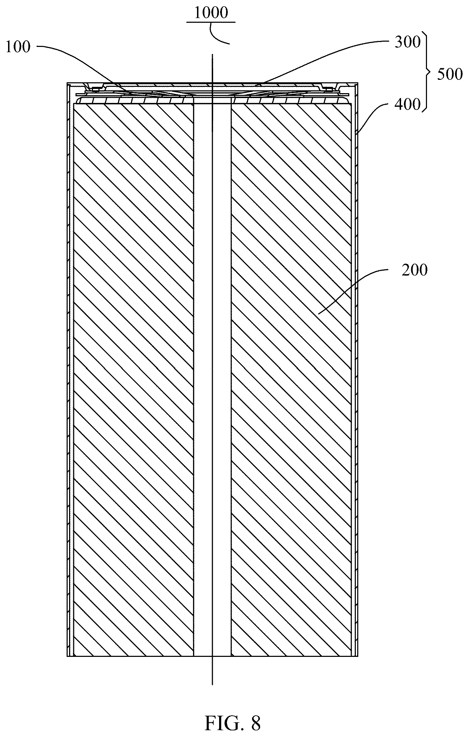

As shown in FIG. 8, the battery cell 1000 according to embodiments of this application includes a housing 500, a jelly roll 200, and a current collector 100.

An accommodation cavity is formed in the housing 500. The jelly roll 200 is disposed in the accommodation cavity. In other words, the jelly roll 200 is adapted to be disposed in the housing 500, to protect the jelly roll 200 by using the housing 500, so as to prolong a service life of the jelly roll 200 and improve use safety of the jelly roll 200.

The current collector 100 is the foregoing current collector 100. The current collector 100 is disposed between the jelly roll 200 and the housing 500. The first connection portion 121 is electrically connected to the jelly roll 200, and the second connection portion 131 is electrically connected to the housing 500.

It can be learned from the foregoing structure that, the battery cell 1000 in embodiments of this application uses the foregoing current collector 100, so that it is ensured that the first connection portion 121 can be set to be electrically connected to the jelly roll 200 and the second connection portion 131 can be set to be electrically connected to the housing 500 on a premise that the current collector 100 does not need to be bent, to reduce bending processes and improve connection efficiency. In addition, it can be further ensured that the current collector 100 has a sufficient connection area with the jelly roll 200, to implement fixed connection between the current collector 100 and the jelly roll 200, increase an overcurrent area of the current collector 100, and avoid insufficient overcurrents of the jelly roll 200 caused by a small overcurrent area of the current collector 100, so as to avoid a problem of serious heat generation of the jelly roll 200. In this way, the service life of the jelly roll 200 is prolonged, and use safety of the jelly roll 200 is improved, to prolong a service life of the battery cell 1000 and improve use safety of the battery cell 1000.

The second connection portion 131 is set to be connected to the housing 500, to implement electrical connection between the current collector 100 and the housing 500, and further implement electrical connection between the jelly roll 200 and the housing 500, so that the battery cell 1000 can work normally.

In addition, structural stability of the battery cell 1000 can be further improved, a capacity of the battery cell 1000 can be further increased, and quality of the battery cell 1000 can be further improved by using the foregoing current collector 100.

In other words, the battery cell 1000 of this application uses the foregoing current collector 100, so that the battery cell 1000 has advantages of a large capacity, a stable structure, a long service life, high use safety, and the like.

Optionally, as shown in FIG. 8, the housing 500 includes a casing 400 and a cover plate 300. The accommodation cavity with an opening is formed in the casing 400. The jelly roll 200 is disposed in the accommodation cavity, the cover plate 300 is disposed at the opening, and the current collector 100 is disposed between the jelly roll 200 and the cover plate 300. The first connection portion 121 is electrically connected to the jelly roll 200, and the second connection portion 131 is electrically connected to the cover plate 300, to implement electrical connection between the jelly roll 200 and the cover plate 300. In other words, in this example, the second connection portion 131 is mainly electrically connected to the cover plate 300.

It should be noted that the accommodation cavity with the opening is formed in the casing 400, and the opening is adapted to implement communication between the interior and the exterior of the accommodation cavity, to ensure that external components (for example, the current collector 100 and the jelly roll 200) can be disposed in the accommodation cavity. The cover plate 300 is disposed at the opening, so that the opening can be sealed by using the cover plate 300, to prevent an external foreign object, dust, and the like from entering the accommodation cavity through the opening, and improve use safety of the jelly roll 200, that is, improve use safety of the battery cell 1000.

In some other examples, the housing 500 includes a casing 400 and a cover plate 300. The accommodation cavity with an opening is formed in the casing 400. The jelly roll 200 is disposed in the accommodation cavity, the cover plate 300 is disposed at the opening, and the current collector 100 is disposed between the jelly roll 200 and the casing 400. The first connection portion 121 is electrically connected to the jelly roll 200, and the second connection portion 131 is electrically connected to the casing 400, to implement electrical connection between the jelly roll 200 and the casing 400. In other words, in this example, the second connection portion 131 is mainly electrically connected to the casing 400 (this example is not shown in the figure).

Optionally, the battery cell 1000 is a cylindrical battery, so that structures (the jelly roll 200 and the housing 500) in the battery cell 1000 can be adapted to a circular current collector.

In some examples, an area of an orthographic projection of the first connection portion 121 on a first plane is $S_1$, and a minimum connection area between the first connection portion 121 and the jelly roll 200 is S, where $S=\gamma S_1$, and $0.2 \leq \gamma \leq 1$. In other words, the minimum connection area between the first connection portion 121 and the jelly roll 200 may be less than the area of the orthographic projection of the first connection portion 121 on the first plane, but it is still necessary to ensure that the first connection portion 121 has a sufficient connection area with the jelly roll 200, so as to ensure an overcurrent capability of the current collector 100. A connection area between the first connection portion 121 and the jelly roll 200 may be measured based on a connection trace, for example, based on a soldering mark. A distinguishing boundary between the first connection portion 121 and the middle portion 122 may be a straight line connecting opposite sidewalls at a connection position between the first connection portion 121 and the middle portion 122.

In addition, the minimum connection area between the first connection portion 121 and the jelly roll 200 may be set to be less than the area of the orthographic projection of the first connection portion 121 on the first plane, so that difficulty in connecting the current collector 100 and the jelly roll 200 can be reduced, and assembly efficiency of the battery cell 1000 can be improved.

It should be noted that, in some examples, to ensure that a worker can effectively determine whether the minimum connection area between the first connection portion 121 and the jelly roll 200 meets a requirement, a minimum connection region may be provided on the first connection portion 121. When all minimum connection regions are connected to the jelly roll 200, it is determined that the minimum connection area between the first connection portion 121 and the jelly roll 200 meets the requirement.

Optionally, a plurality of positioning portions are provided on the first connection portion 121, for example, positioning grooves or positioning protrusions, and a region enclosed by the plurality of positioning portions forms a minimum connection region.

In some examples, the minimum connection area S between the first connection portion 121 and the jelly roll 200 may be determined based on a minimum overcurrent requirement C of the jelly roll 200, where the minimum connection area S between the first connection portion 121 and the jelly roll 200 and the minimum overcurrent requirement C of the jelly roll 200 need to meet the following condition:

$$nNKS \geq C.$$

n indicates a quantity of first connection portions 121; N is a compensation coefficient, and N ranges from 0.7 to 1; and K is an overcurrent coefficient of the first connection portion 121.

It should be noted that K may be directly determined based on a material of the first connection portion 121 and is in a unit of Ah/mm². The minimum overcurrent requirement C of the jelly roll 200 may be determined based on charging time required by the jelly roll 200, and a specific determining manner is as follows: In an actual production process of the battery cell 1000, fast charging time that a battery cell 1000 to be produced needs to meet may be directly determined. In other words, charging time of the battery cell 1000 may be clearly learned. The charging time of the jelly roll 200 is determined based on the charging time of the battery cell 1000, and then the minimum overcurrent requirement C of the jelly roll 200 is obtained based on the charging time of the jelly roll 200. Finally, the minimum connection area S between the first connection portion 121 and the jelly roll 200 is calculated based on the minimum overcurrent requirement C, so that the minimum connection area S between the first connection portion 121 and the jelly roll 200 and the minimum overcurrent requirement C of the jelly roll 200 can meet the specific condition. In this way, it is ensured that the overcurrent capability of the current collector 100 can meet the minimum overcurrent requirement of the jelly roll 200, to avoid insufficient overcurrents of the jelly roll 200 and avoid the problem of serious heat generation of the jelly roll 200, so as to prolong the service life of the jelly roll 200 and improve use safety of the jelly roll 200.

In some specific examples, the minimum overcurrent requirement C of the jelly roll 200 ranges from 15 Ah to 120 Ah.

Optionally, a connection width H between the first connection portion 121 and the middle portion 122 and the minimum overcurrent requirement C of the jelly roll 200 also need to meet a specific condition, to further ensure the overcurrent capability of the current collector 100.

Specifically, the connection width H between the first connection portion 121 and the middle portion 122 and the minimum overcurrent requirement C of the jelly roll 200 meet the following condition:

$$nKH\delta = C.$$

n indicates the quantity of the first connection portions 121; $\delta$ indicates a thickness of the first connection portion 121; and K is the overcurrent coefficient of the current collector 100, and K may be directly determined based on a material of the current collector 100 and is in a unit of Ah/mm².

In other words, in an actual production process of the battery cell 1000, it is ensured that the minimum connection area S between the first connection portion 121 and the jelly roll 200 and the minimum overcurrent requirement C of the jelly roll 200 meet the specific condition, and the connection width H between the first connection portion 121 and the middle portion 122 and the minimum overcurrent requirement C of the jelly roll 200 also need to meet the specific condition, to effectively ensure the overcurrent capability of the current collector 100.

A specific method for determining the connection width H between the first connection portion 121 and the middle portion 122 is as follows: In the actual production process of the battery cell 1000, the charging time of the battery cell 1000 may be directly determined. After the charging time of the battery cell 1000 is determined, the charging time of the jelly roll 200 is first determined based on the charging time of the battery cell 1000, and the minimum overcurrent requirement C of the jelly roll 200 is obtained based on the charging time of the jelly roll 200. Finally, the connection width H between the first connection portion 121 and the middle portion 122 is calculated based on the minimum overcurrent requirement C, the quantity of first connection portions 121, and the thickness of the first connection portion 121, so that the connection width H between the first connection portion 121 and the middle portion 122 and the minimum overcurrent requirement C of the jelly roll 200 meet the specific condition.

The following describes a battery pack 2000 according to embodiments of this application.

The battery pack 2000 according to embodiments of this application includes a plurality of battery cells 1000, where each battery cell 1000 is the foregoing battery cell 1000.

It can be learned from the foregoing structure that the battery pack 2000 according to embodiments of this application uses the foregoing battery cell 1000, to reduce manufacturing difficulty of the battery pack 2000, ensure working performance of the battery pack 2000, further improve structural stability of the battery pack 2000, prolong a service life of the battery pack 2000, and improve use safety of the battery pack 2000.

The following describes a power consuming apparatus 3000 according to embodiments of this application.

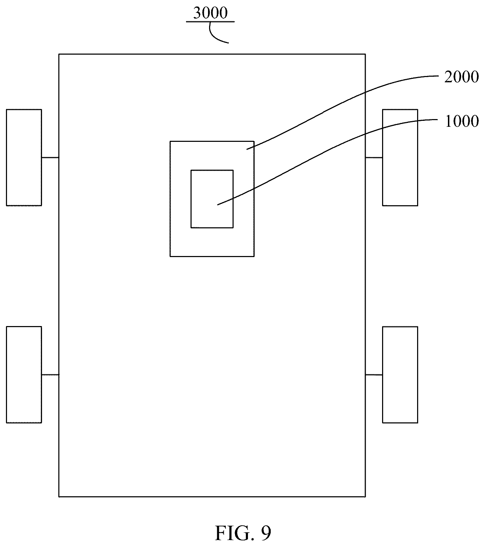

As shown in FIG. 9, the power consuming apparatus 3000 according to embodiments of this application includes a battery pack 2000, where the battery pack 2000 is the foregoing battery pack 2000.

It can be learned from the foregoing structure that the power consuming apparatus 3000 according to embodiments of this application uses the foregoing battery pack 2000, that is, uses the foregoing battery cell 1000, to ensure working performance of the power consuming apparatus 3000 and improve use safety of the power consuming apparatus 3000, so as to prolong a service life of the power consuming apparatus 3000 and reduce use costs.

It should be noted that the power consuming apparatus 3000 herein may be a vehicle, an energy storage cabinet, a ship, an aircraft, or the like.

In the description of this application, it should be noted that, unless otherwise expressly specified and limited, terms "mount" and "connect" will be understood in a broad sense. For example, the terms may indicate fixed connection, detachable connection, or integral connection; or may indicate mechanical connection or electrical connection. A person of ordinary skill in the art can understand specific meanings of these terms in this application based on specific situations.

FIG. 2 and FIG. 3 both show six first connection portions 121 for the purpose of illustrative description. However, after reading the above technical solution, a person of ordinary skill will clearly understand that extending this solution to a technical solution with another quantity of first connection portions 121 also falls within the scope of this application.

Other components of the current collector 100, the battery cell 1000, the battery pack 2000, and the power consuming apparatus 3000 according to embodiments of this application are known to a person of ordinary skill in the art, and are not described in detail herein again.

In the description of this specification, descriptions with reference to the term such as "embodiment", "example", or the like mean that specific features, structures or characteristics described with reference to the embodiment or example are included in at least one embodiment or example of this application. In this specification, illustrative expressions of these terms do not necessarily refer to the same embodiment or example. Moreover, the specific feature, structure, material, or characteristic described may be combined in any suitable manner in any one or more embodiments or examples.

Although embodiments of this application have been shown and described, a person of ordinary skill in the art can understand that various changes, modifications, substitutions and variations may be made to these embodiments without departing from the principle and the purpose of this application, and the scope of this application is defined by the claims and their equivalents.

## Claims

1.  A current collector (100), wherein an orthographic projection of an outer peripheral wall of the current collector (100) on a first plane is located on a first circle, the first plane is perpendicular to a thickness direction of the current collector (100), and the current collector (100) comprises:

    a first connection region (120), wherein the first connection region (120) comprises a middle portion (122) and a plurality of first connection portions (121), the plurality of first connection portions (121) are sequentially arranged in a circumferential direction of the middle portion (122), the plurality of first connection portions (121) are separately connected to the middle portion (122), and each first connection portion (121) is adapted to be electrically connected to a jelly roll (200);

    a second connection portion (131), wherein the second connection portion (131) extends in the circumferential direction of the middle portion (122) and is located on one side of the first connection region (120); and
    a connecting piece (140), wherein the connecting piece (140) is connected between the second connection portion (131) and the middle portion (122), the first connection portion (121) and an inner peripheral wall of the second connection portion (131) are spaced apart to form a spacing gap (150), a value of a radial dimension $G_1$ of an orthographic projection of the spacing gap (150) on the first plane ranges from 0.5 mm to 2 mm, and the second connection portion (131) is electrically connected to a housing (500).

2.  The current collector (100) according to claim 1, wherein the first connection portion (121) and the connecting piece (140) are spaced apart in a circumferential direction of the current collector (100).

3.  The current collector (100) according to claim 1 or 2, wherein the connecting piece (140) extends obliquely toward the second connection portion (131) relative to the middle portion (122), so that the first connection region (120) and the second connection portion (131) have a height difference.

4.  The current collector (100) according to any one of claims 1 to 3, wherein a value of a radius $R_1$ of the current collector (100) ranges from 10 mm to 100 mm.

5.  The current collector (100) according to any one of claims 1 to 4, wherein orthographic projections of outer peripheral walls of the plurality of first connection portions (121) on the first plane are all located on a second circle, and a radius $R_2$ of the second circle and the radius $R_1$ of the current collector (100) meet the following condition: $\frac{1}{2}R_1 \leq R_2 < R_1$.

6.  The current collector (100) according to any one of claims 1 to 5, wherein the second connection portion (131) forms an annular structure, and the inner peripheral wall of the second connection portion (131) is connected to the middle portion (122) through the connecting piece (140).

7.  The current collector (100) according to claim 6, wherein a radial width of the second connection portion (131) is $W_1$, $1 \text{ mm} \leq W_1 \leq \frac{1}{2}R_1$, and $R_1$ indicates the radius of the current collector (100).

8.  The current collector (100) according to claim 6 or 7, wherein there are a plurality of connecting pieces (140), and the plurality of connecting pieces (140)

are evenly spaced apart; and
the plurality of first connection portions (121) and the plurality of connecting pieces (140) are alternately distributed in the circumferential direction of the current collector (100).

9. The current collector (100) according to any one of claims 1 to 8, wherein the first connection portion (121) has a first surface connected to the jelly roll (200), the second connection portion (131) has a second surface connected to the housing (500), and the first surface and the second surface are parallel to each other.

10. The current collector (100) according to any one of claims 1 to 9, wherein the second connection portion (131) is provided with a stop protrusion (1313) extending toward the first connection portion (121), the stop protrusion (1313) is located on a radially outer side of the first connection portion (121), and the stop protrusion (1313) is adapted to be located on a radially outer side of a tab of the jelly roll (200).

11. The current collector (100) according to claim 10, wherein the stop protrusion (1313) is defined through bending and deformation of a part of the second connection portion (131).

12. The current collector (100) according to any one of claims 1 to 11, wherein a first limiting portion (132) is provided on the second connection portion (131), and the first limiting portion (132) is adapted to be in limiting fit with a second limiting portion (310) on the housing (500).

13. The current collector (100) according to claim 12, wherein the first limiting portion (132) is a limiting port that extends through the second connection portion (131) in a thickness direction of the second connection portion (131).

14. The current collector (100) according to claim 13, wherein the second connection portion (131) forms an annular structure, an orthographic projection of the limiting port on the first plane forms a rectangle, a circumferential length of the limiting port is $G_2$, 0.5 mm$\leq G_2 \leq \pi R_1/n_1$, $R_1$ indicates the radius of the current collector (100), and $n_1$ indicates a quantity of limiting ports; and/or
a radial width $W_3$ of the limiting port meets the following condition: 0.5 mm$\leq W_3 < W_1$, wherein the radial width of the second connection portion (131) is $W_1$.

15. The current collector (100) according to any one of claims 1 to 14, wherein the middle portion (122) is provided with a liquid injection port (1221) that extends through the middle portion (122) in a thickness direction of the middle portion (122).

16. A battery cell (1000), comprising:

a housing (500), wherein an accommodation cavity is formed in the housing (500);
a jelly roll (200), wherein the jelly roll (200) is disposed in the accommodation cavity; and
a current collector (100), wherein the current collector (100) is the current collector (100) according to any one of claims 1 to 15, the current collector (100) is disposed between the jelly roll (200) and the housing (500), the first connection portion (121) is electrically connected to the jelly roll (200), and the second connection portion (131) is connected to the housing (500).

17. A battery pack (2000), comprising a plurality of battery cells (1000) according to claim 16.

18. A power consuming apparatus (3000), comprising the battery pack (2000) according to claim 17.

FIG. 1

FIG. 2

FIG. 3

FIG. 4

FIG. 5

FIG. 6

FIG. 7

FIG. 8

FIG. 9

## INTERNATIONAL SEARCH REPORT

| International application No. |
| --- |
| **PCT/CN2024/086338** |

| A. | CLASSIFICATION OF SUBJECT MATTER |
| --- | --- |

H01M 50/531(2021.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT; ENTXTC; DWPI; ENTXT; CNKI: 电池, 集流, 盘, 连接, 间隔, 间隙, battery, cell, current collect, disc, plate, connect, interval, gap

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 219832956 U (BYD CO., LTD.) 13 October 2023 (2023-10-13) description, paragraphs 0054-0178, and figure 1 | 1-18 |
| X | CN 215070164 U (BYD CO., LTD.) 07 December 2021 (2021-12-07) description, paragraphs 0053 and 0073-0075, and figures 1 and 6 | 1-18 |
| X | CN 218101633 U (CALB TECHNOLOGY CO., LTD.) 20 December 2022 (2022-12-20) description, paragraphs 0028-0088, and figures 1 and 6 | 1-18 |
| Y | CN 218182414 U (SHENZHEN BAK POWER BATTERY CO., LTD.) 30 December 2022 (2022-12-30) description, paragraphs 0063-0076, and figures 8-16 | 1-18 |
| Y | CN 218300155 U (EVE ENERGY CO., LTD.) 13 January 2023 (2023-01-13) description, paragraphs 0041-0051, and figure 1 | 1-18 |

☐ Further documents are listed in the continuation of Box C.　　☑ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **10 July 2024** | **12 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/086338**

| Patent document cited in search report | | | Publication date (day/month/year) | Patent family member(s) | | | Publication date (day/month/year) |
|---|---|---|---|---|---|---|---|
| CN | 219832956 | U | 13 October 2023 | None | | | |
| CN | 215070164 | U | 07 December 2021 | None | | | |
| CN | 218101633 | U | 20 December 2022 | None | | | |
| CN | 218182414 | U | 30 December 2022 | CN | 114678662 | A | 28 June 2022 |
| CN | 218300155 | U | 13 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023209045515